# EUROPEAN PATENT APPLICATION

(11) **EP 2 857 806 A1**
(43) Date of publication of application: **08.04.2015**
(21) Application number: 13794111.8
(22) Date of filing: 19.04.2013
(51) Int. Cl.: G01F 15/06, G01F 3/22

(54) **ELECTRICAL GAS METER AND APPARATUS AND METHOD FOR REMOTELY TRANSMITTING GAS USAGE**

(30) Priority: 25.05.2012 KR 20120056325; 31.07.2012 KR 20120084015
(71) Applicant: One-TL Co., Ltd., Seoul 153-023 (KR); Park, Jae Sam, Incheon 404-730 (KR)
(72) Inventor: PARK, Jae Sam, Incheon 404-730 (KR); KANG, Byeong Hak, Seoul 151-050 (KR)
(74) Representative: Gulde & Partner
(86) International application number: PCT/KR2013/003335
(87) International publication number: WO 2013/176403

(57) **Abstract**

Disclosed are an apparatus and method for remotely transmitting gas usage in a gas meter. The apparatus includes: a main body having a gas inlet and a gas outlet; a diaphragm assembly for pumping gas; a rotary slider controlling the amount of gas introduced to the diaphragm assembly; a counter calculating cumulatively the amount of gas introduced into or discharged from a valve; a remote interface unit digitizing the value cumulatively calculated by the counter to transmit the digitized value to a remote control unit; and a controller controlling the remote interface unit to counter the number of revolutions of the counter so that the cumulatively calculated value of the gas is digitized to display the digitized value on a display unit. The digitized value of the gas is transmitted to the remote control unit. Therefore, the apparatus can exactly measure the flow rate, reduce power consumption, and remotely check gas usage.

## Description

### Technical Field

The present invention generally relates to gas meters and, more particularly, to an electronic gas meter and an apparatus and method for remotely transmitting gas usage that can be easily manufactured and be configured to reliably prevent gas to be metered from leaking, and which can precisely measure the flow rate of gas, reduce power consumption, and make it possible to remotely check the gas usage.

### Background Art

Generally, gas meters are devices that use diaphragms changing in volume depending on the volume of gas flowing through a main body and measure the usage of gas (LNG or the like) supplied to, for example, residential buildings.

Such a gas meter includes a lower casing and an upper casing. A gas inlet and a gas outlet are formed in the upper casing so that gas to be measured in usage is drawn into the gas meter through the gas inlet and then discharged therefrom through the gas outlet. A counter for counting the amount of gas drawn into or discharged from the gas meter is provided at a predetermined position in the upper casing.

Diaphragms for pumping gas drawn into the gas meter are provided at left and right sides in the lower casing. A rotary slider is provided in the upper casing. The rotary slider is rotated by the pumping operation of the diaphragms and includes a valve for controlling the flow of gas drawn into or discharged from the diaphragm.

A valve seat assembly is disposed below the valve. The valve seat assembly has a valve seat for airtightly sealing a gap between the upper and lower casings so that the flow of gas can be reliably controlled by the valve.

The rotary slider conducts a link operation resulting from the pumping operation of the diaphragms. The rotary slider is connected to the valve that selects the supply or discharge of gas. The valve has in the bottom thereof an open surface and a closed surface and comes into close contact with the valve seat. The valve rotates and thus selectively opens and closes an inlet and an outlet that are formed in the valve seat.

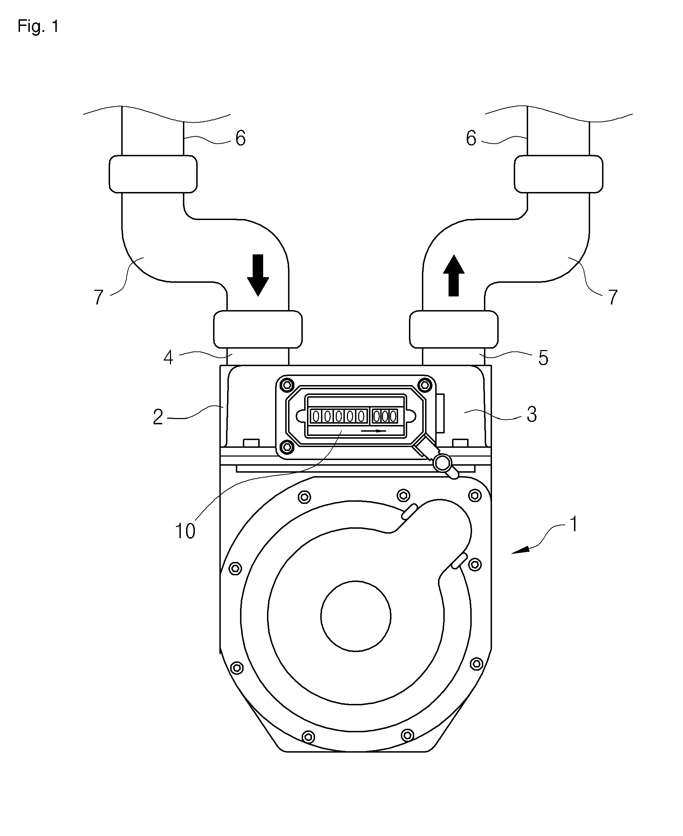

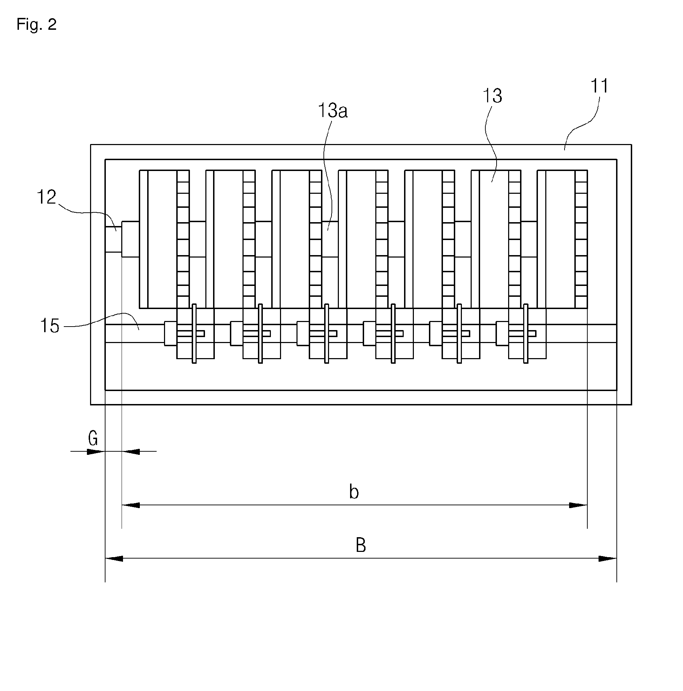

Figs. 1 and 2 illustrate such a conventional gas meter.

Fig. 1 is a front view of the conventional gas meter. As shown in the drawing, the conventional gas meter 1 includes an upper casing 2 that has an inlet port 4 and an outlet port 5 formed at opposite sides in an upper surface of a casing body 3. Gas pipes 6 are respectively connected to the inlet port 4 and the outlet port 5. A counter 10 is provided on an upper portion of the upper casing 2.

A process of measuring the usage of gas using the above-mentioned gas meter will be described.

First, a difference between the pressure of gas drawn into the main body of the gas meter and the pressure of gas discharged from the gas meter is caused when gas is supplied to the gas meter. Thus, the diaphragms and a connection plate connected to the diaphragms are repeatedly moved forward and backward. Thereby, a diaphragm lever connected to the connection plate and a drive shaft of the rotary slider are rotated.

Then, the rotary slider fixed to the drive shaft is rotated by the rotation of the drive shaft. The torque of the rotary slider is transmitted to numerical gears of the counter via a plurality of intermediate gears coupled to the rotary slider so that the numerical gear disposed at the rightmost position is rotated. In this way, the usage of gas is cumulatively measured and indicated.

In detail, when the numerical gear of the counter that is disposed at the rightmost position makes one complete rotation, a protrusion provided on the left surface of the rightmost numerical gear rotates by one graduation a corresponding power transmission gear that is disposed below the rightmost numerical gear in a direction opposite the direction in which the rightmost numerical gear rotates. Then, a next numerical gear (disposed at the left side of the rightmost numerical gear) that engages with the corresponding power transmission gear makes 1/10 turn in the same direction as that of the rightmost numerical gear.

The above-mentioned operation of cumulatively measuring the usage of gas is continuously conducted while gas is used. The usage of gas is indicated in such a way that numerals marked on the outer circumferential surfaces of the numerical gears are observed to the outside through a transparent window installed in the front surface of the gas meter.

Fig. 2 illustrates in detail the construction of the counter of the conventional gas meter. Referring to Fig. 2, the numerical gears 13 are rotatably provided on a shaft 12 fixed to a frame 11 of the counter. Each numerical gear 13 has on the left surface thereof: a boss 13a spacing the numerical gear apart from the adjacent numerical gear by a predetermined distance so that each numerical gear can rotate without interference; and a protrusion 13b for rotating the corresponding power transmission gear disposed below the numerical gears.

The power transmission gears 14 are rotatably provided on a shaft 15 below the numerical gears 13. Each power transmission gear 14 is disposed between the corresponding adjacent numerical gears 13 so that when the right numerical gear 13 makes one complete rotation, the power transmission gear 14 rotates the left numerical gear 13 by 1/10 turn.

In detail, when the numerical gear 13 that is disposed at the right side of each power transmission gear 14 makes one complete rotation, the protrusion 13b provided on the left surface of the right numerical gear 13 pushes the corresponding power transmission gear 14. Then, the power transmission gear 14 that is rotatably provided on the shaft 15 rotates by 1/10 turn the numerical gear 3 disposed at the left side of the power transmission gear 14.

However, in the conventional counter having the above-mentioned construction, the numerical gears 3 and the power transmission gears 4 must always engage with each other so as to precisely measure cumulatively the usage of gas. For this, a gap G that is clearance for the operation of the gears is required between an inner width B of the frame 1 and a width b of the entirety of the assembled numerical gears. If the gap is greater than a designed value because of a manufacture error or a cumulative assembly tolerance, a numerical gear may not engage with the corresponding power transmission gear. In this case, the usage of gas cannot be precisely measured.

Furthermore, to check the usage of gas through the conventional counter, a user must manually check the counter by visually inspecting it. Therefore, the conventional counter cannot be used in a system that remotely controls the usage of gas.

### Disclosure

### Technical Problem

Accordingly, the present invention has been made keeping in mind the above problems occurring in the prior art, and an object of the present invention is to provide an electronic gas meter using an optical sensor and to an apparatus and method for remotely transmitting the usage of gas from the gas meter.

Another object of the present invention is to provide an electronic gas meter that is configured such that the usage of gas can be remotely checked and to an apparatus and method for remotely transmitting the usage of gas from the gas meter.

### Technical Solution

In order to accomplish the above objects, in an aspect, the present invention provides an apparatus for remotely transmitting gas usage of a gas meter, including: a main body having a gas inlet and a gas outlet; a diaphragm assembly provided to pump gas supplied into the main body; a rotary slider configured to be rotated by pumping of the diaphragm assembly, the rotary slider controlling a flow rate of gas drawn into the diaphragm assembly; a counter rotatably coupled to a portion of the rotary slider, the counter calculating cumulatively the amount of gas drawn into or discharged from a valve; a display unit displaying gas usage cumulatively calculated by the counter; a remote interface unit digitizing the gas usage cumulatively calculated by the counter and transmitting the digitized gas usage to a remote control unit; and a controller controlling the remote interface unit such that the cumulatively calculated gas usage is digitized by counting the number of rotations of the counter and displayed on the display unit, and the digitized gas usage is transmitted to the remote control unit.

The counter may include: an impeller rotatably provided on a portion of the rotary slider; a cover plate covering a portion of the impeller, the cover plate having a guide depression therein; an interrupter formed by extending upward a portion of an outer circumferential surface of the impeller around a central portion of an upper surface of the impeller, the interrupter being rotated along with rotation of the impeller; and a plurality of sensors including a first sensor for signal transmission and a second sensor for signal reception that are respectively disposed inside and outside the cover plate, wherein the first sensor outputs a pulse signal, and the second sensor outputs an off or on sensing signal depending on whether a signal output from the first sensor is blocked by the interrupter or not depending on a position of the interrupter. The controller may instruct the first sensor to output a pulse signal at a period corresponding to 1/2 or less of a time taken for the impeller to make one complete rotation at a maximum speed. The counter may count the number of rotations of the impeller every time a section, in which a pulse signal is blocked by the interrupter and thus not transmitted to the second sensor, and a section, in which the interrupter is not present and thus a pulse signal is transmitted to the second sensor, pass once.

The interrupter may be rounded at a predetermined curvature radius, and an imaginary line may connect a first end of the interrupter to a point corresponding to a second end of the interrupter meets a central axis of the impeller.

The counter may include: an impeller rotatably provided on a portion of the rotary slider; a cover plate covering a portion of the impeller, the cover plate having a guide depression therein; a reflector formed by extending upward portions of an outer circumferential surface of the impeller around a central portion of an upper surface of the impeller, the reflector being rotated along with rotation of the impeller; and a plurality of sensors including a first sensor for signal transmission and a second sensor for signal reception that are integrally formed and respectively disposed inside and outside the cover plate, wherein the first sensor outputs a pulse signal, and the second sensor outputs an on or off sensing signal depending whether or not a signal output from the first sensor is reflected by the reflector, depending on the position of the reflector. The controller may instruct the first sensor to output a pulse signal at a period corresponding to 1/2 or less of a time taken for the impeller to make one complete rotation at a maximum speed. The controller may count the number of rotations of the impeller every time a section, in which a pulse signal is reflected by the reflector and thus transmitted to the second sensor, and a section, in which the reflector is not present and thus a pulse signal is not transmitted to the second sensor, pass once.

The counter may include: an impeller rotatably provided on a portion of the rotary slider; a reflector formed by radially extending portions of an outer circumferential surface of the impeller around a central portion of an upper surface of the impeller, the reflector being rotated along with rotation of the impeller; and a plurality of sensors including a first sensor for signal transmission and a second sensor for signal reception that are integrally provided and disposed above the reflector, wherein the first sensor outputs a pulse signal, and the second sensor outputs an on or off sensing signal depending on whether a signal output from the first sensor is reflected by the reflector or not depending on the position of the reflector. The controller may instruct the first sensor to output a pulse signal at a period corresponding to 1/2 or less of a time taken for the impeller to make one complete rotation at a maximum speed. The controller may count the number of rotations of the impeller every time a section, in which a pulse signal is reflected by the reflector and thus transmitted to the second sensor, and a section, in which the reflector is not present and thus a pulse signal is not transmitted to the second sensor, pass once.

In another aspect, the present invention provides an apparatus for remotely transmitting gas usage of a gas meter configured such that flow of gas is controlled by a valve assembly rotating between an upper casing and a lower casing that are airtightly assembled with each other. The apparatus includes: an impeller provided at a predetermined position in the upper casing, the impeller being rotatably coupled to the valve assembly; a cover plate covering the impeller and having a guide depression therein, the cover plate being airtightly coupled to the upper casing; and an outer cover having therein a counter counting the number of rotations of the impeller and cumulatively calculating and indicating usage of gas drawn into or discharged from the valve assembly, and an interface unit transmitting the gas usage cumulatively calculated by the counter to an outside, the outer cover being airtightly coupled to a perimeter of the cover plate.

The counter may include an interrupter formed by extending upward a portion of an outer circumferential surface of the impeller around a central portion of an upper surface of the impeller, the interrupter being rotated along with rotation of the impeller; and a plurality of sensors including a first sensor for signal transmission and a second sensor for signal reception that are respectively disposed inside and outside the guide depression of the cover plate, wherein the first sensor outputs a pulse signal, and the second sensor outputs an off or on sensing signal depending whether or not a signal output from the first sensor is blocked by the interrupter, depending on positions of the interrupter.

The counter may further include a controller instructing the first sensor to output a pulse signal at a period corresponding to 1/2 or less of a time taken for the impeller to make one complete rotation at a maximum speed. The controller may count the number of rotations of the impeller every time a section, in which a pulse signal is blocked by the interrupter and thus not transmitted to the second sensor, and a section, in which the interrupter is not present and thus a pulse signal is transmitted to the second sensor, pass once.

The counter may include: a reflector formed by extending upward portions of an outer circumferential surface of the impeller around a central portion of an upper surface of the impeller, the reflector being rotated along with rotation of the impeller; and a plurality of sensors including a first sensor for signal transmission and a second sensor for signal reception that are integrally formed and respectively disposed inside and outside the cover plate, wherein the first sensor outputs a pulse signal, and the second sensor outputs an on or off sensing signal depending on whether a signal output from the first sensor is reflected by one of the reflector or not depending on the position of the reflector. The counter may further include a controller instructing the first sensor to output a pulse signal at a period corresponding to 1/2 or less of a time taken for the impeller to make one complete rotation at a maximum speed, the controller counting the number of rotations of the impeller every time a section, in which a pulse signal is reflected by reflector and thus transmitted to the second sensor, and a section, in which the reflector is not present and thus a pulse signal is not transmitted to the second sensor, pass once.

The counter may include: a reflector formed by radially extending portions of an outer circumferential surface of the impeller around a central portion of an upper surface of the impeller, the reflector being rotated along with rotation of the impeller; and a plurality of sensors including a first sensor for signal transmission and a second sensor for signal reception that are integrally formed and disposed above the cover plate, wherein the first sensor outputs a pulse signal, and the second sensor outputs an on or off sensing signal depending whether or not a signal output from the first sensor is reflected by the reflector, depending on the position of the reflector. The counter may include a controller instructing the first sensor to output a pulse signal at a period corresponding to 1/2 or less of a time taken for the impeller to make one complete rotation at a maximum speed. The controller may count the number of rotations of the impeller every time a section, in which a pulse signal is reflected by the reflector and thus transmitted to the second sensor, and a section, in which the reflector is not present and thus a pulse signal is not transmitted to the second sensor, pass once.

In a further aspect, the present invention provides an electronic gas meter configured such that flow of gas is controlled by a valve assembly rotating between an upper casing and a lower casing that are airtightly assembled with each other. The electronic gas meter includes: an impeller provided at a predetermined position in the upper casing, the impeller being rotatably coupled to the valve assembly; a cover plate covering the impeller and having a guide depression therein, the cover plate being airtightly coupled to the upper casing; and an outer cover having therein a counter counting the number of rotations of the impeller and cumulatively integrating and indicating usage of gas drawn into or discharged from the valve assembly, and an interface unit transmitting the gas usage cumulatively integrated by the counter to an outside, the outer cover being airtightly coupled to a perimeter of the cover plate.

### Advantageous Effects

In a gas meter and an apparatus and method for remotely transmitting gas usage according to the present invention, the number of rotations of an impeller is selectively counted in response to a signal transmitted from sensors. Therefore, the usage of gas can be precisely measured.

Furthermore, a signal transmitting part is repeatedly turned on and off at a predetermined period and thus is not required to be always maintained in a turned on state. Therefore, power consumption can be reduced.

Thanks to having a simple structure, the gas meter can be easily manufactured. Consequently, the production cost of the gas meter can be reduced.

In addition, the method of controlling the gas meter is simple, so that the reliability thereof can be enhanced and a failure rate can be reduced. Therefore, product satisfaction of consumers can be improved.

Moreover, in the present invention, the usage of gas can be remotely checked. Thus, a technician is not required to directly visit a residential building in which the gas meter is installed for measurement of the meter. Time cost and labor cost can therefore be reduced.

### Description of Drawings

Fig. 1 is a front view of a conventional gas meter;
Fig. 2 is a view illustrating the construction of a counter of the conventional gas meter;
Fig. 3 is a sectional view illustrating a gas meter according to an embodiment of the present invention;
Fig. 4 is an enlarged sectional view showing a counter according to an embodiment of the present invention;
Fig. 5 is a perspective view showing an impeller and sensors according to the embodiment of the present invention;
Fig. 6 is a view illustrating conditions when the corresponding sensor receives a signal;
Fig. 7 is a view illustrating conditions when the sensors are blocked by an interrupter;
Fig. 8 is a schematic view showing the operational relationship between the interrupter and the sensors according to the present invention;
Fig. 9 is a block diagram showing the construction of the gas meter according to the present invention;
Fig. 10 is a sectional view showing a counter of a gas meter according to another embodiment of the present invention;
Fig. 11 is a perspective view showing an impeller and sensors of Fig. 10;
Fig. 12 is a sectional view of Fig. 11;
Fig. 13 is a sectional view showing a counter according to a further embodiment of the present invention;
Fig. 14 is a perspective view showing an impeller and sensors of Fig. 13;
Fig. 15 is a sectional view of Fig. 14;
Fig. 16 is a view illustrating the operation of the impeller and the sensors;
Figs. 17 and 18 are flowcharts showing a control method for counting the number of rotations of a gas meter according to an embodiment of the present invention;
Fig. 19 is a flowchart illustrating an operation of remotely transmitting the usage of gas according to the present invention; and
Figs. 20a through 20c are perspective views illustrating sensors and an impeller provided with a plurality of interrupters according to other embodiments of the present invention.

### Best Mode

The terms and words used in the specification and claims must not be limited to typical or dictionary meanings, but must be regarded as concepts selected by the inventor as concepts that best illustrate the present invention, and must be interpreted as having meanings and concepts adapted to the scope and spirit of the present invention to aid in understanding the technology of the present invention.

In the specification, when the explanatory phrase "a part includes a component" is used, this means that the part may further include other components rather than excluding the components unless special explanation is given. Furthermore, terms, such as "···part", "···unit", "module", "device", etc., indicate a unit for processing at least one function or operation, and it can be embodied by hardware, software or a combination of hardware and software.

Hereinafter, embodiments of the present invention will be described in detail with reference to the drawings.

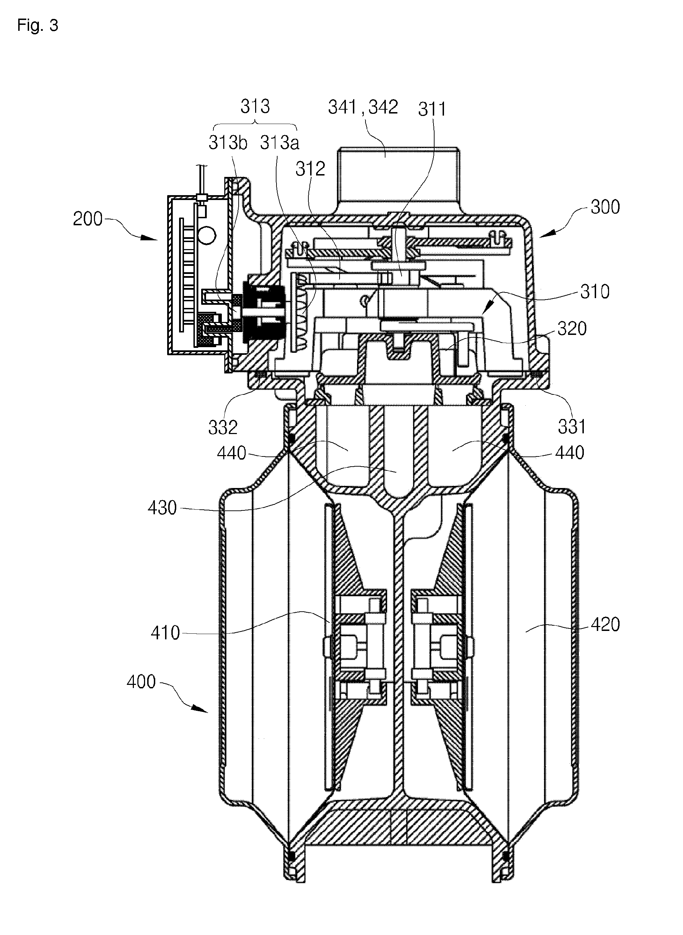

Fig. 3 is a sectional view illustrating a gas meter according to an embodiment of the present invention. The gas meter includes: an upper casing 300 and a lower casing 400 that form a main body having a gas inlet and a gas outlet; diaphragm assemblies 410 provided as a means for pumping gas drawn into the lower casing 400; a rotary slider 310 that is rotated by the pumping operation of the diaphragm assemblies 410 and controls a rate at which gas is drawn into the diaphragm assemblies 410; and a counter 200 that is rotatably coupled at a predetermined position to the rotary slider 310 and calculates cumulatively the amount of gas drawn into or discharged from a valve.

The upper casing 300 has an inlet port 341 and an outlet port 342, through which gas is drawn into and discharged out of the gas meter, for use in measuring cumulatively the usage of gas. Counting the amount of gas drawn into or discharged out of the gas meter, the counter 200 is disposed at a predetermined position in the upper casing 300.

The diaphragm assemblies 410 for use as a means for pumping drawn gas are provided at left and right sides in the lower casing 400. The rotary slider 310 is disposed in the upper casing 300 and includes a valve assembly 320 that is rotated by the pumping operation of the diaphragm assemblies 410 and controls the flow of gas drawn into or discharged from the diaphragm assemblies 410.

A valve seat assembly having a valve seat is provided under a lower end of the valve assembly 320 so as to reliably seal a gap between the upper and lower casings 300 and 400 while the flow of gas is controlled by the valve assembly 320.

The valve seat and the valve seat assembly have well known structures; therefore, further explanation thereof will be omitted.

Hereinafter, the general construction of the lower casing 400 will be explained in brief. A partition unit is provided at a predetermined position in the lower casing 400. The partition unit has partition walls for forming a flow path of gas drawn into the lower casing 400. The partition unit is configured such that a through hole 430 formed in a central portion of the partition unit and a discharge hole formed at a predetermined position in the partition unit are connected at upper ends thereof to each other through an opening. Communication holes 440 are formed by partition walls radially provided around the through hole 430. The communication holes 440 communicate the through hole 430, the discharge hole and the diaphragm chamber 420 with each other.

A pad depression 332 is formed in the perimeter of an upper surface of the lower casing 400. A sealing pad 331 is provided in the pad depression 332 to seal a gap between the upper and lower casing 300 and 400. Preferably, the sealing pad 331 integrally has a casing pad that extends along the perimeter of the upper surface of the lower casing 400, and a discharge hole pad that seals the discharge hole.

The rotary slider 310 includes a rotary gear 313 that engages with a rotating gear 312 in a bevel gear engagement style. The rotating gear 312 is rotated by the operation of the valve assembly 320 that controls the flow of gas drawn into or discharged from the diaphragm chamber 420.

The rotary gear 313 includes a first gear 313a engaging with the rotating gear 312, and a second gear 313b that is rotatably provided in a body of an impeller 210.

When the rotary gear 313 rotates the impeller 210, the counter 200 counts the number of rotations of the impeller 210 and calculates cumulatively gas usage.

The counter 200 is disposed at a predetermined position in the upper casing 300 and configured to count the amount of gas drawn into and discharged from the gas meter. The construction of the counter 200 will be explained in more detail with reference to the drawings.

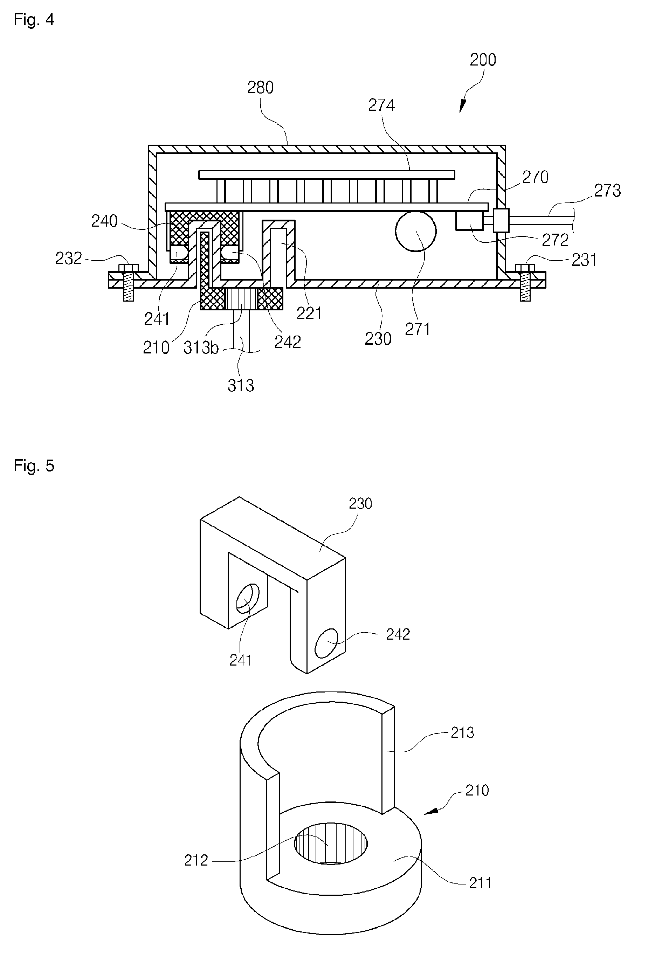

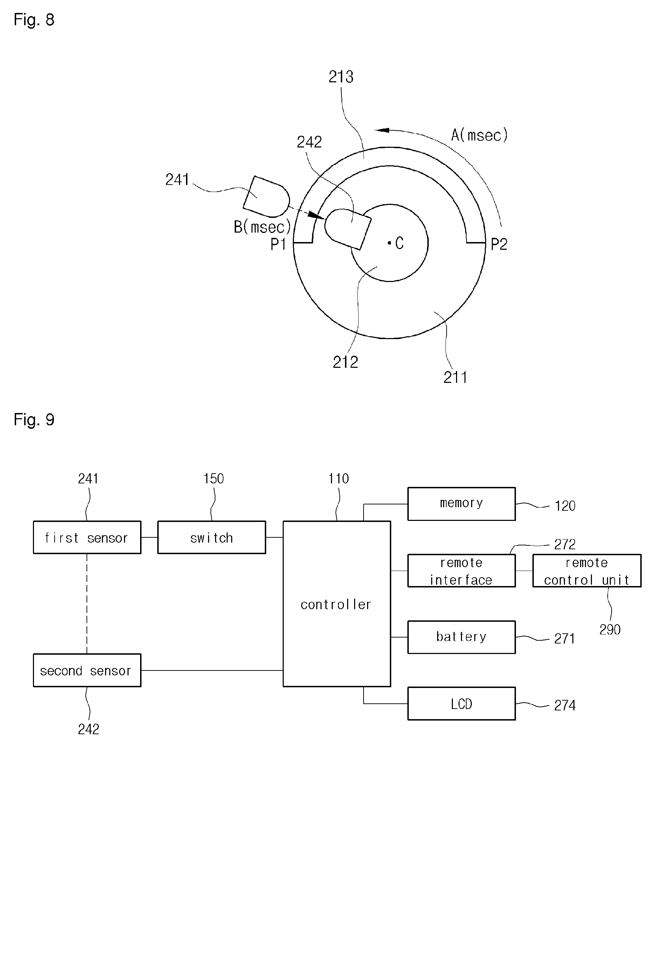

Fig. 4 is an enlarged sectional view showing the counter according to an embodiment of the present invention. Fig. 9 is a block diagram showing the construction of the gas meter according to the present invention. The counter includes: a sensor support 240 supporting a plurality of sensors 241 and 242; a cover 230 covering the open upper surface of the impeller 210; and an outer cover 280. The cover plate 230 and the outer cover 280 are airtightly coupled to each other by bolts 231 and 232.

The cover plate 230 covers the impeller 210 that is disposed at a predetermined position in the upper casing 300 and rotatably coupled to the rotary slider. A guide depression 221 is formed in the cover plate 230 around a rotating shaft of the impeller so that the impeller can rotate along the guide depression 221. The cover plate 230 is airtightly coupled to the upper casing 300.

The outer cover 280 houses therein: the counter 200 that counts the number of rotations of the impeller 210 and cumulatively calculates and indicates the amount of gas drawn into or discharged from the gas meter; and a remote interface unit 272 that transmits the usage of gas cumulatively calculated by the counter 200 to the outside.

Of the sensors 241 and 242, the first sensor 241 may be a signal transmitting part for signal transmission, and the second sensor 242 may be a signal receiving part for signal reception.

For instance, the first sensor 241 may be a light emitting diode (LED) transmitting an optical signal. The second sensor 242 may be a photo transistor receiving the optical signal.

Alternatively, the second sensor 242 may be a signal transmitting part, and the first sensor 241 may be a signal receiving part.

In this embodiment, the first sensor 241 is disposed outside the cover plate 230, and the second sensor 242 is disposed inside the cover plate 230.

However, the above-mentioned arrangement of the first and second sensors 241 and 242 is only one example. That is, the second sensor 242 may be disposed outside the cover plate 230 and the first sensor 241 may be disposed inside the cover plate 230.

The impeller 210 that is configured so as to be rotatable is disposed between the first and second sensors 241 and 242.

The first and second sensors 241 and 242 are supported by the sensor support 240. An upper end of the sensor support 240 is mounted to a printed circuit board (PCB) 270.

The PCB 270 is provided with a display unit 274 displaying the usage of gas cumulatively integrated by the counter 200; a remote interface unit 272 digitizing the usage of gas cumulatively calculated by the counter 200 and transmitting it to a remote control unit 290; a controller 110 controlling the remote interface unit 272 such that the usage of gas cumulatively calculated by the counter 200 is digitized and transmitted to the remote control unit 290 by the remote interface unit 272 and is displayed on the display unit 274; and a battery 271 for use in operating the system when external power is interrupted.

Configured to implement typical remote control, the remote interface unit 272 functions to transmit the gas usage to the remote control unit 290 or receives a command from the remote control unit 290. Communication between the remote interface unit 272 and the remote control unit 290 can be embodied by a variety of communication methods such as RS232, RS485, DC-PLC, M-BUS, etc.

To provide services for monitoring and controlling the gas usage, the gas meter having the above-mentioned construction is connected through the internet to the remote control unit 290 that is operated by a server system.

Furthermore, the remote control unit 290 may be configured such that it matches with the gas meter, reads metering information and data about of the conditions of the meter, and then transmits the information and data to a metering server through a mobile communication network such as a CDMA PCS, a cellular phone or a GSM.

Hereinafter, the impeller according to the present invention will be described in detail with reference to the drawings.

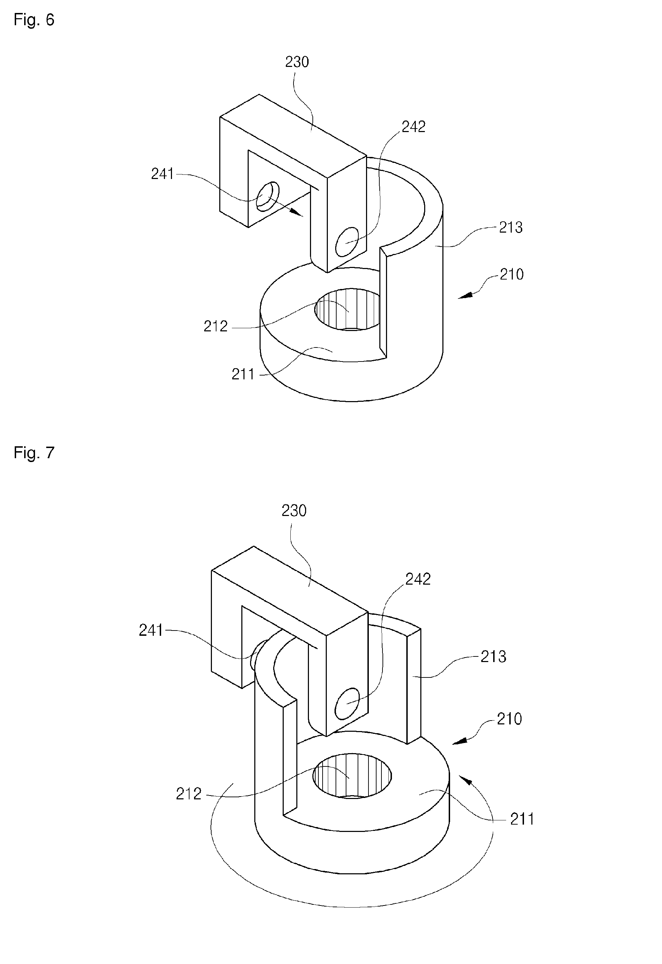

Fig. 5 is a perspective view showing the impeller and the sensors according to the embodiment of the present invention. Fig. 6 is a view illustrating conditions when the corresponding sensor receives a signal. Fig. 7 is a view illustrating conditions when the sensors are blocked by the interrupter. Fig. 8 is a schematic view showing the operational relationship between the interrupter and the sensors according to the present invention.

The impeller 210 according to the embodiment of the present invention includes: an impeller body 211 that has in a central portion thereof an insert hole 212 into which the rotary gear is inserted; and an interrupter 213 extending upward from the impeller body 211.

The impeller body 211 has a disc shape. The interrupter 213 is provided on the perimeter of an upper surface of the impeller body 211 and is formed to have the same radius of curvature as that of the impeller body 211. That is, it can be understood that the interrupter 213 is formed by extending upward a portion of the outer circumferential surface of the impeller body 211.

The interrupter 213 extends upward from a portion of the perimeter of the upper surface of the impeller body 211 that corresponds to about 1/2 of the perimeter of the upper surface of the impeller body 211. That is, the upper surface of the impeller body 211 is circular and is formed 360° around the insert hole 212. The interrupter 213 is formed on a portion of the upper surface of the impeller body 211 that corresponds to 180° around the insert hole 212.

In other words, an imaginary line that connects a point P1 corresponding to one end of the interrupter 213 to a point P2 corresponding to the other end of the interrupter 213 meets the center C of the insert hole 212.

When the valve assembly 320 is rotated by gas drawn into the gas meter, the rotary slider 310 interlocked with the valve assembly 320 is also rotated. Then, the second gear 313b inserted into the insert hole 212 of the impeller body 211 is rotated by the rotation of the rotating gear 312 of the rotary gear 313. Consequently, the impeller body 211 and the interrupter 213 are rotated around the insert hole 212.

The sensor support 230 has a plurality of sensor mounting depressions in which the sensors 241 and 242 are respectively installed to face each other.

While the impeller 210 rotates, a signal is selectively transmitted from the first sensor 241 to the second sensor 242.

As shown in Fig. 6, when the interrupter 213 is not positioned in the space between the first sensor 241 and the second sensor 242, a signal can be transmitted from the first sensor 241 to the second sensor 242.

On the other hand, as shown in Fig. 7, when the interrupter 213 is positioned in the space between the first sensor 241 and the second sensor 242, a signal output from the first sensor 241 is blocked by the interrupter 213 and thus cannot be transmitted to the second sensor 242.

As shown in Fig. 8, when a signal output from the first sensor 241 is blocked by the interrupter 213, the second sensor 242 is turned off. When the impeller 210 further rotates and thus is not present in the space between the first sensor 241 and the second sensor 242, a signal output from the first sensor 241 is transmitted to the second sensor 242, whereby the second sensor 242 is turned on.

In this embodiment, the period of rotation of the impeller 210 is A (msec). Here, the value "A" can be determined based on the maximum RPM of the impeller 210 during a fluid flowing process.

For example, when the maximum RPM of the impeller 210 or the interrupter 213 is 20 rps, in other words, when the number of rotations per second is 20, the time it takes to make one complete rotation, that is, the period, is 50 msec. In this case, the value "A" is 50 msec.

Furthermore, the period at which a signal is transmitted from the first sensor 241 is B (msec). The period B at which a signal is generated from the first sensor 241 corresponds to the period at which the controller (110, refer to Fig. 9) outputs an ON signal.

The value "B" may be smaller than A/2.

For example, when the value "A" is 50 msec, the value "B" may be 20 msec, which is smaller than 25 msec.

That is, the signal generation period is shorter than 1/2 of the period of rotation of the impeller 210.

Because the signal generation period of the first sensor is shorter than 1/2 of the period of rotation of the impeller 210, the first sensor 241 generates signals at least two times, for example, two, three or four times, while the impeller makes one complete rotation.

Furthermore, since the circumferential length of the interrupter 213 is 1/2 of the length of the circumference of the impeller body 211, each case where a signal is transmitted from the first sensor 241 to the second sensor 242 (the ON state of the second sensor 242) and the case where a signal output from the first sensor 241 is not transmitted to the second sensor 242 (the OFF state of the second sensor 242) is induced at least once while the impeller body 211 makes one complete rotation.

That is, while the impeller body 211 makes one complete rotation, the second sensor 242 is turned on at least two times, for example, two, three or four times. In addition, the second sensor 242 is also turned off at least two times, for example, two, three or four times.

In brief, depending on the RPM of the impeller 210, the number with which the second sensor 242 is turned on or off per one complete rotation of the impeller 210 is changed.

Hereinafter, the construction and method for precisely the number of rotations of the impeller 210 will be explained with reference to the attached drawings.

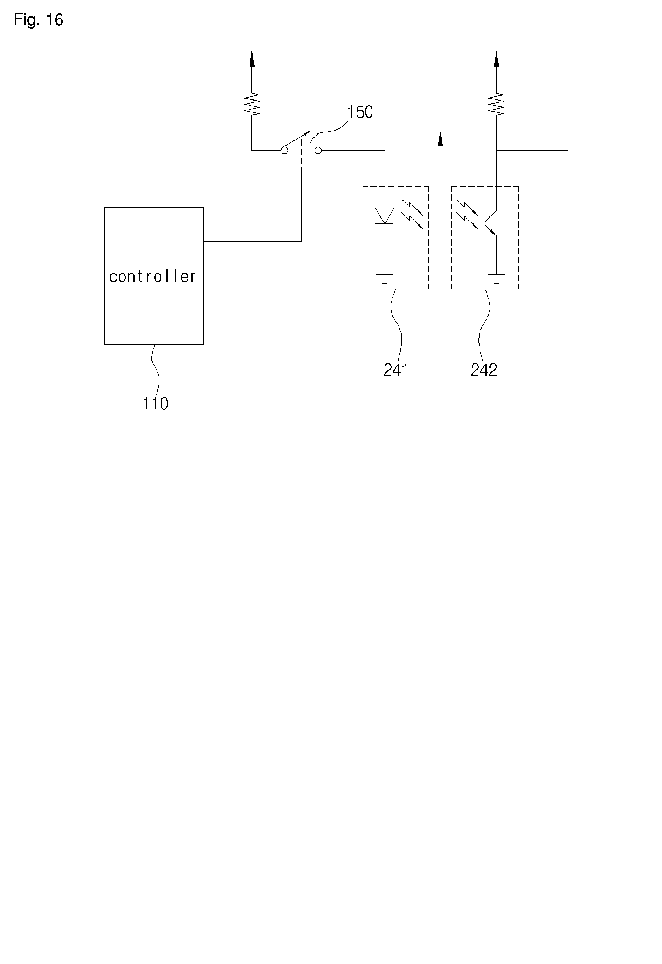

Fig. 9 is a block diagram showing the construction of the gas meter according to the embodiment of the present invention. Fig. 16 is a circuit diagram illustrating the signal transmitting and receiving operation of the gas meter according to the embodiment of the present invention. Fig. 9 illustrates the construction of the gas meter for transmission of a signal between the controller 110 and the first and second sensors 241 and 242. Fig. 16 illustrates the signal transmitting and receiving operation of the controller.

Referring to the drawings, the gas meter according to the embodiment of the present invention includes: the first sensor 241; the second sensor 242; a switch 150 that is selectively turned on/off to instruct the first sensor 241 to transmit a signal; the controller 110 outputting a signal for the on/off operation of the switch 150; and a memory 120 storing information about the on/OFF state of the sensors 241 and 242.

As shown in Fig. 16, the controller 110 outputs a switch ON signal at a predetermined period. Under control of the controller 110, the switch 150 is turned at the predetermined period. When the switch 150 is turned on, the first sensor 241 generates a signal.

When the interrupter 213 is positioned between the first sensor 241 and the second sensor 242, the second sensor 242 is turned off. At this time, a predetermined signal, for example, a high level signal, is input to the controller 110.

When the interrupter 213 is not positioned between the first sensor 241 and the second sensor 242, the second sensor 242 is turned on. At this time, a predetermined signal, for example, a low level signal is input to the controller 110.

Depending on whether receiving a high level signal or a low level signal, the controller 110 controls counting the number of rotations of the impeller 210 according to a method of counting the number of rotations.

The method of counting the number of rotations will be explained in detail later herein.

Hereinafter, a counter and an impeller of a gas meter according to another embodiment of the present invention will be described with reference to the attached drawings.

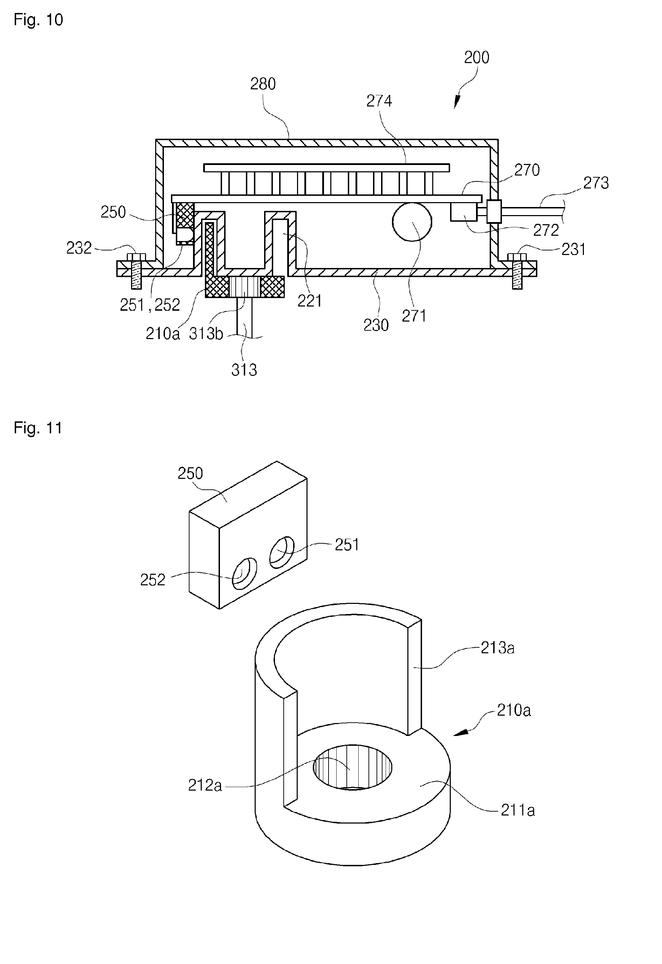

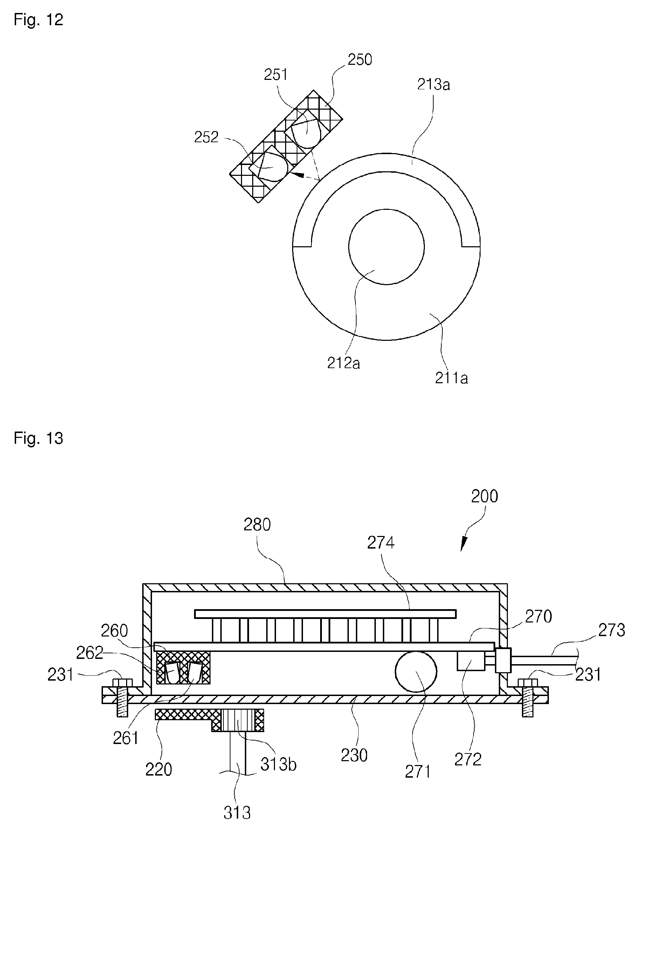

Fig. 10 is a sectional view showing the counter of the gas meter according to this embodiment of the present invention. Fig. 11 is a perspective view showing an impeller and sensors of Fig. 10. Fig. 12 is a sectional view of Fig. 11.

As shown in the drawings, the counter according to this embodiment includes: an impeller 210a that is rotatably provided on a predetermined portion of the rotary slider; a cover plate 230a that covers a portion of the impeller 210a and has a guide depression therein; a reflector 213a that is formed around a central portion of an upper surface of the impeller 210a by extending upward a portion of an outer circumferential surface of the impeller 210a and is rotated along with the impeller 210a; and a first sensor 251 for signal transmission and a second sensor 252 for signal reception. The first and second sensors 251 and 252 are integrally formed and are disposed inside or outside the cover plate 230. The first sensor 251 transmits a pulse signal. The second sensor 252 outputs an on or off sensing signal depending on whether a signal output from the first sensor 251 is reflected by the reflector 213a or not depending on the rotation of the reflector 213a. The controller 110 instructs the first sensor 251 to transmit a pulse signal at a period corresponding to 1/2 or less of the time it takes for the impeller 210a to make one complete rotation at the maximum speed. The controller 110 counts the number of rotations of the impeller 210a every time a section, in which a pulse is reflected by the reflector 213a and transmitted to the second sensor 252, and a section, in which the reflector 213a is not present and thus a pulse cannot be transmitted to the second sensor 252, pass once.

This embodiment is characterized in that the sensor support 250 supports the sensors 251 and 252, and the first sensor 251 for signal transmission and the second sensor 252 for signal reception are integrally provided and are disposed inside or outside the cover plate 230.

Referring to Fig. 10, in this embodiment, the sensor support 250 is illustrated as being located outside the guide depression 221 in which the impeller 210 is disposed. Alternatively, the interrupter 213 may be located inside the circular guide depression 221.

The first sensor 251 for signal transmission and the second sensor 252 for signal reception are integrally formed and are configured such that a pulse output from the first sensor 251 is reflected by the reflector, and the second sensor 252 receives the reflected pulse.

Preferably, referring to Fig. 12, the first and second sensors 251 and 252 are configured to be angled relative to the reflector 213 at predetermined angles so that the second sensor 252 for signal reception can effectively receive a pulse transmitted from the first sensor 251 for signal transmission.

Furthermore, the reflector 213a has the same shape as that of the interrupter 213 that is formed around the central portion of the upper surface of the impeller 210a by extending upward a portion of the outer circumferential surface of the impeller 210a.

That is, the reflector 213a extends upward from a portion of the perimeter of the upper surface of the impeller body 211a that corresponds to about 1/2 of the perimeter of the upper surface of the impeller body 211a. In other words, the upper surface of the impeller body 211a is circular and is formed 360° around the insert hole 212a. The reflector 213a is formed on a portion of the upper surface of the impeller body 211a that corresponds to 180° around insert hole 212a. The reflector 213a is made of material that can effectively reflect a pulse output from the first sensor 251 toward the second sensor 252.

The operation of the counter according to this embodiment will be explained below. When the valve assembly 320 is rotated by gas drawn into the gas meter, the rotary slider 310 interlocked with the valve assembly 320 is also rotated. Then, the second gear 313b inserted into the insert hole 212a of the impeller body 211a is rotated by the rotation of the rotating gear 312 of the rotary gear 313. Consequently, the impeller body 211a and the reflector 213a are rotated around the insert hole 212a. The controller 110 instructs the first sensor 251 to transmit a pulse signal at a period corresponding to 1/2 or less of the time it takes for the impeller 210a to make one complete rotation at the maximum speed. In addition, the controller 110 counts the number of rotations of the impeller 210a in response to signals reflected by the reflector 213a and received into the second sensor.

In this embodiment, although the reflector 213a has been illustrated as being formed by extending upward from 1/2 of the perimeter of the upper surface of the impeller body, the shape of the reflector 213a is not limited to this and can be changed in a variety of ways so long as it can reflect light because the intended purpose of the reflector 213a is to reflect a pulse output from the first sensor 251 and transmit the pulse to the second sensor 252.

For example, the reflector may be formed such that it is made of a circular plate, wherein half of the circular plate is coated with white paint that can reflect light, and the other half of the circular plate is coated with black paint that absorbs light.

The structures of the cover plate 230 and the outer cover 280 are the same as those of the first embodiment of the present invention; therefore, further explanation is deemed unnecessary.

Hereinafter, a counter and an impeller according to a further embodiment of the present invention will be described with reference to the attached drawings.

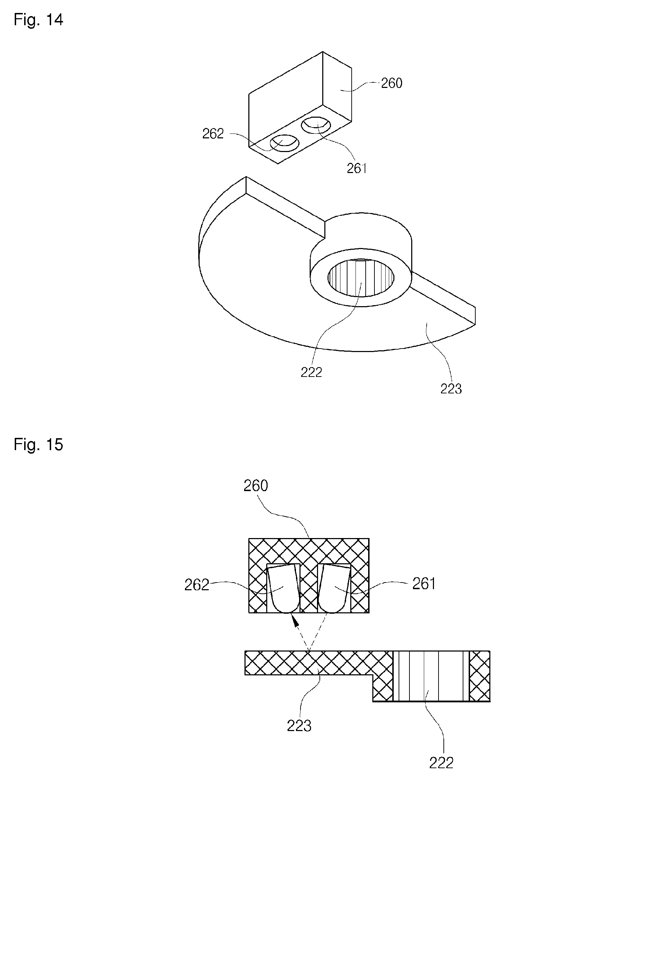

Fig. 13 is a sectional view showing the counter according to this embodiment of the present invention. Fig. 14 is a perspective view showing the impeller and sensors of Fig. 13. Fig. 15 is a sectional view of Fig. 14.

The counter 200 according to this embodiment includes: a reflector 223 that radially extends from a portion of an outer circumferential surface of the impeller 220 around the rotating shaft of the impeller 220 and rotates along with the impeller 220; and a plurality of sensors including a first sensor 261 for signal transmission and a second sensor 262 for signal reception that are integrally formed and are disposed above the reflector 223. The first sensor 261 transmits a pulse signal. The second sensor 262 outputs an on or off sensing signal depending whether or not a signal output from the first sensor 261 is reflected by the reflector 223, depending on the rotation of the reflector 223. The counter 200 further includes a controller that instructs the first sensor 261 to transmit a pulse signal at a period corresponding to 1/2 or less of the time it takes for the impeller 220 to make one complete rotation at the maximum speed. The controller counts the number of rotations of the impeller 220 every time a section, in which a pulse is reflected by the reflector 223 and transmitted to the second sensor 262, and a section, in which the reflector 223 is not present and thus a pulse cannot be transmitted to the second sensor 262, pass once.

This embodiment is characterized in that the sensor support 260 supports the sensors 261 and 262, and the first sensor 261 for signal transmission and the second sensor 262 for signal reception are integrally provided and are disposed above the cover plate 230 to transmit a pulse to the rotating impeller 220 and sense a pulse signal reflected by the impeller 220.

For this, the impeller 220 includes the reflector 223 that radially extends from a portion of the outer circumferential surface of the impeller 220 around the rotating shaft of the impeller 220.

Referring to Figs. 14 and 15, the reflector 223 has a semicircular fan shape having as the center the insert hole 222 into which the rotary gear is inserted. The first sensor 261 for signal transmission and the second sensor 262 for signal reception are configured to be angled relative to the reflector 223 at predetermined angles so that the second sensor 262 can effectively receive a signal transmitted from the first sensor 261.

That is, the first sensor 261 for signal transmission and the second sensor 262 for signal reception are integrally formed and are configured such that a pulse output from the first sensor 261 is reflected by the reflector 223, and the second sensor 262 receives the reflected pulse.

The operation of the counter according to this embodiment will be explained below. When the valve assembly 320 is rotated by gas drawn into the gas meter, the rotary slider 310 interlocked with the valve assembly 320 is also rotated. Then, the second gear 313b inserted into the insert hole 222 of the impeller body 220 is rotated by the rotation of the rotating gear 312 of the rotary gear 313. Consequently, the impeller body 220 and the reflector 223 are rotated around the insert hole 222. The controller 110 instructs the first sensor 261 to transmit a pulse signal at a period corresponding to 1/2 or less of the time it takes for the impeller 220 to make one complete rotation at the maximum speed. In addition, the controller 110 counts the number of rotations of the impeller 220 in response to signals reflected by the reflector 223 and received into the second sensor.

In this embodiment, although the reflector 223 has been illustrated as being formed by radially extending from a portion of the outer circumferential surface of the impeller around the rotating shaft of the impeller, the shape of the reflector 223 is not limited to this and can be changed in a variety of ways so long as it can reflect light because the intended purpose of the reflector 223 is to reflect a pulse output from the first sensor 261 and transmit the pulse to the second sensor 262.

For example, the reflector may be formed such that it is made of a circular plate, wherein half of the circular plate is coated with white paint that can reflect light, and the other half of the circular plate is coated with black paint that absorbs light.

Hereinafter, a method of counting the number of rotations of the impeller in the gas meter having the above-mentioned construction will be described in detail.

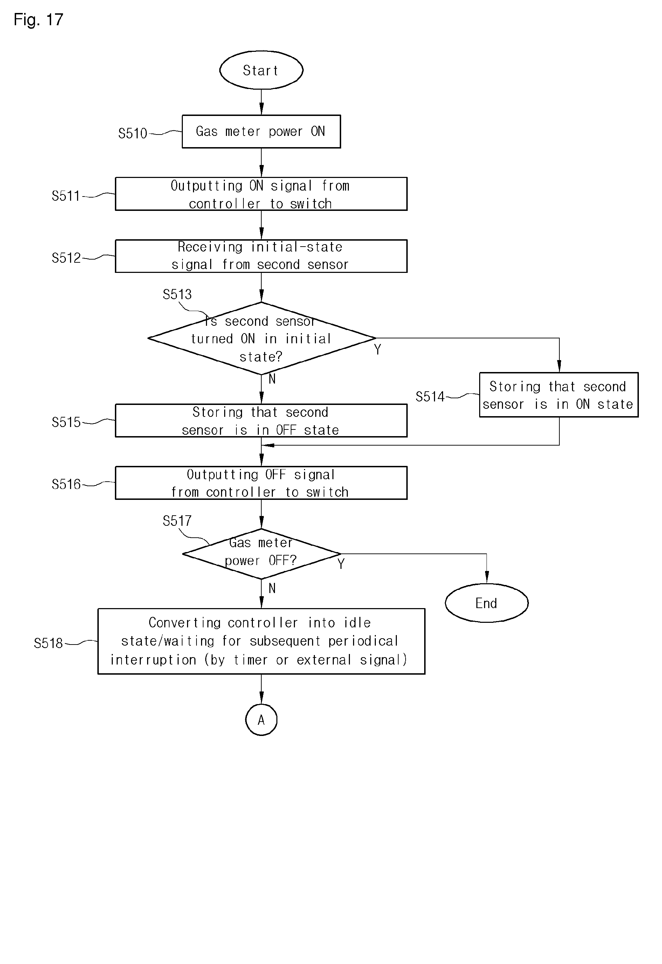

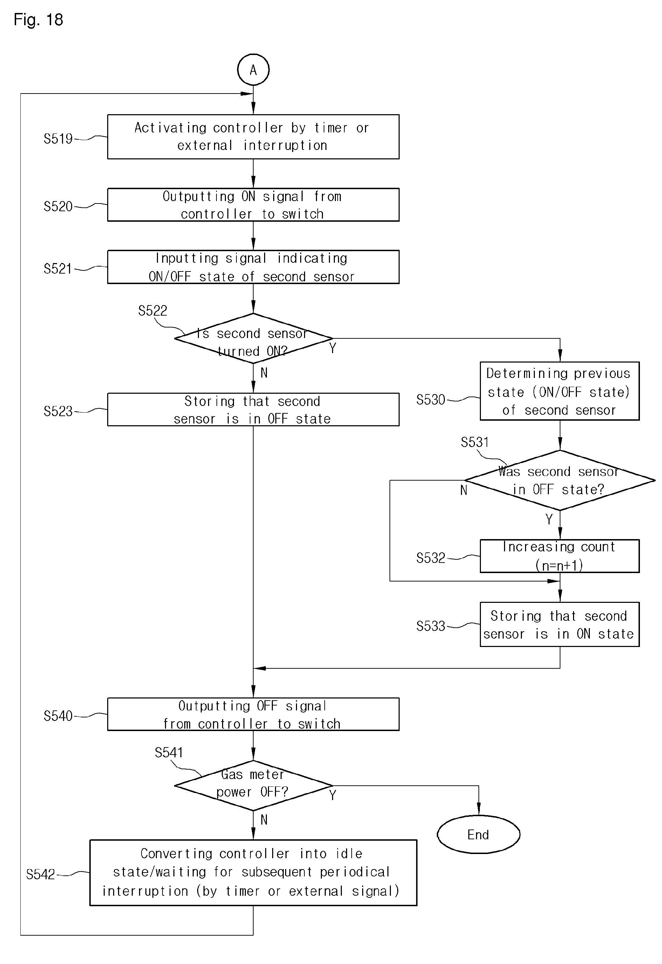

Figs. 17 and 18 are flowcharts showing a control method for counting the number of rotations of a gas meter according to an embodiment of the present invention. As shown in the drawings, when the gas meter is powered on (S510), the controller 110 outputs an ON signal to the switch 150 to instruct the first sensor 241 to be operated. Thereby, the switch 150 is turned on so that the first sensor 241 generates a signal (S511).

In response to the signal generation of the first sensor 241, the initial state of the second sensor 242 is checked. That is, whether a signal transmitted from the second sensor 242 to the controller 110 is on or off is determined.

In other words, it is determined whether the interrupter 213 has been positioned between the first and second sensors 241 and 242 or not before the gas meter is operated.

When the interrupter 213 is positioned between the first and second sensors 241 and 242, the second sensor 242 is in the OFF state. When the interrupter 213 is not positioned between the first and second sensors 241 and 242, the second sensor 242 is in the ON state.

As such, depending on the position of the interrupter 213, the initial ON/OFF state of the second sensor 242 can be determined (S513).

When the initial state of the second sensor 242 is the ON state (S514), the memory 120 of the controller 110 stores that the second sensor 242 is in the ON state (S514). When the initial state of the second sensor 242 is the OFF state (S515), the memory 120 of the controller 110 stores that the second sensor 242 is in the OFF state (S516).

Thereafter, the controller 110 outputs an OFF signal to the switch 150 to interrupt the operation of the first sensor 241 (S517). Thereby, the switch 150 is turned off so that the signal transmission of the first sensor 241 is interrupted.

Whether the gas meter is turned off is determined. If the gas meter is not turned off, the controller 110 enters an idle state. The idle state can be understood as being a state in which the controller 110 is on standby to be activated later at a predetermined time point (period) by a timer or an external interruption signal (S518 and S519).

Referring to Fig. 18, the controller 110 can be activated after a preset duration (timer interruption) or by an external periodical signal (external interruption) (S519).

When the controller 110 is activated, an ON signal is output to the switch 150 so as to operate the first sensor 241 (S520). Thereby, the switch 150 is turned on to instruct the first sensor 241 to generate a signal.

In response to the signal generation of the first sensor, the current state of the second sensor 242 is checked (S521). That is, depending on whether the interrupter 213 is positioned between the first and second sensors 241 and 242 or not, it is determined whether a current signal transmitted from the second sensor 242 to the controller 110 is an ON signal or an OFF signal (S521 and S522).

If the current state of the second sensor 242 is the OFF state, the memory 120 stores that the current state of the second sensor 242 is the OFF state (S523).

If the current state of the second sensor 242 is the ON state, a previous state (whether in the ON or OFF state) of the second sensor is determined (S530 and S531).

If the previous state of the second sensor 242 was the OFF state, the count number for calculating the number of rotations of the impeller 210 is increased (n = n + 1) (S532), and it is stored that the state of the second sensor 242 is the ON state (S533).

If, at step S531, the previous state of the second sensor 242 was the ON state, it is stored that the state of the second sensor 242 is the ON state without increasing the count number.

Here, the term "previous state of the second sensor" means the following.

Referring to Fig. 18, when the initial interrupt process is conducted, the term "previous state of the second sensor" refers to the state of the second sensor 242 that is stored in the memory 120 at step S515 or S516 of Fig. 18.

Thereafter, when the interrupt operation is conducted according to a predetermined period, the term "previous state of the second sensor" refers to the state of the second sensor 242 that is stored in the memory 120 at step S523 or S533 of Fig. 18.

After it is stored in the memory 120 at step S533 that the second sensor 242 is in the ON state, the controller 110 outputs an OFF signal to the switch 150 to interrupt the operation of the first sensor 241 (S540). Hence, the switch 150 is turned off, and the signal transmission of the first sensor 241 is interrupted.

Thereafter, whether the gas meter is turned off is determined. If the gas meter is not turned off, the controller 110 enters the idle state (S541 and S542). That is, the controller 110 is converted into the standby state to be activated at a subsequent time point (period) by the timer or an external interruption signal (S519).

According to the above-mentioned measurement method, only when the state of the second sensor 242 is determined and is converted from the OFF state into the ON state can the number of rotations of the impeller be counted.

Consequently, when the impeller makes one complete rotation, the number of rotations of the impeller can be precisely increased by one count.

Of course, in another embodiment, the method may be configured such that only when the state of the second sensor 242 is converted from the ON state into the OFF state can the number of rotations of the impeller be increased.

As stated above, in the present invention, even when the number of the OFF states or ON states of the second sensor 242 measured per one complete rotation of the impeller 210 is changed depending on the RPM of the impeller 210, the number of rotations of the impeller 210 can be precisely counted because one complete rotation of the impeller 210 increases the count by only one.

Furthermore, rather than the first and second sensors 241 and 241 being always maintained in the ON state, the first sensor 241 is turned on at a predetermined period, and only when the first sensor 241 is turned on can whether the second sensor 242 is turned on or off be determined.

Therefore, the time for which the first and second sensors 241 and 242 consume electric current is reduced, whereby the electric current consumption can be reduced. Given the fact that gas meters use a battery, the present invention can be effectively applied to gas meters.

In the similar manner to the above-mentioned method, a method of counting the number of rotations of the impeller in the gas meter having the counter according to the embodiment of Figs. 10 through 12 is conducted.

That is, in the method of counting the number of rotations of the impeller in the gas meter having the counter according to embodiment of Figs. 10 through 12, the switch 150 is controlled such that a signal is transmitted to the first sensor depending on the rotation of the impeller 210a in the same manner as that of the above-mentioned method. However, in this embodiment, a signal reflected by the reflector and transmitted to the second sensor 252 is used in counting the number of rotations of the impeller in the gas meter, unlike the above-mentioned method.

Hereinafter, the process of counting the number of rotations of the impeller will be explained in brief without referring to the drawings.

When the gas meter is powered on, the controller 110 outputs an ON signal to the switch 150 to instruct the first sensor 251 to be operated. Thereby, the switch 150 is turned on so that the first sensor 251 generates a signal.

In response to the signal generation of the first sensor 251, the initial state of the second sensor 252 is checked. That is, whether a signal transmitted from the second sensor 252 to the controller 110 is on or off is determined.

In other words, it is determined whether the second sensor 252 has been operated by the reflector 213a before the gas meter is operated.

If a signal is transmitted to the second sensor 252 by the reflector 213a, the second sensor 252 is in the ON state. If the second sensor 252 cannot receive a signal because the reflector 213a has rotated to a position at which it cannot receive the signal transmitted from the first sensor, the second sensor 252 is in the OFF state.

As such, depending on the position of the reflector 213a, the initial ON/OFF state of the second sensor 252 can be determined.

When the initial state of the second sensor 252 is the ON state, the memory 120 of the controller 110 stores that the second sensor 252 is in the ON state. When the initial state of the second sensor 252 is the OFF state, the memory 120 of the controller 110 stores that the second sensor 252 is in the OFF state.

Thereafter, the controller 110 outputs an OFF signal to the switch 150 to interrupt the operation of the first sensor 251. Thereby, the switch 150 is turned off so that the signal transmission of the first sensor 251 is interrupted.

Whether the gas meter is turned off is determined. If the gas meter is not turned off, the controller 110 enters an idle state. The idle state can be understood as being a state in which the controller 110 is on standby to be activated later at a predetermined time point (period) by a timer or an external interruption signal.

The controller 110 can be activated after a preset duration (timer interruption) or by an external periodical signal (external interruption).

When the controller 110 is activated, an ON signal is output to the switch 150 so as to operate the first sensor 251. Thereby, the switch 150 is turned on to instruct the first sensor 251 to generate a signal.

In response to the signal generation of the first sensor 251, the current state of the second sensor 252 is checked. That is, depending on whether the reflector 213a is currently positioned just ahead of the first and second sensors 251 and 252, it is determined whether a current signal transmitted from the second sensor 252 to the controller 110 is an ON signal or an OFF signal.

If the current state of the second sensor 252 is the OFF state, the memory 120 stores that the current state of the second sensor 252 is the OFF state. If the current state of the second sensor 252 is the ON state, a previous state (whether in the ON or OFF state) of the second sensor is determined.

If the previous state of the second sensor 252 was the OFF state, the count number for measuring the number of rotations of the impeller 210a is increased (n = n + 1), and it is stored that the state of the second sensor 252 is the ON state. If the previous state of the second sensor 252 was the ON state, it is stored that the state of the second sensor 252 is the ON state without increasing the count number.

After it is stored in the memory 120 that the state of the second sensor 252 is the ON state, the controller 110 outputs an OFF signal to the switch 150 to interrupt the operation of the first sensor 251. Hence, the switch 150 is turned off, and the signal transmission of the first sensor 251 is interrupted.

Thereafter, whether the gas meter is turned off is determined. If the gas meter is not turned off, the controller 110 enters the idle state. That is, the controller 110 is converted into the standby state to be activated at a subsequent time point (period) by the timer or an external interruption signal.

According to the method according to this embodiment, only when the state of the second sensor 252 is determined and is converted from the OFF state into the ON state can the number of rotations of the impeller be counted. Consequently, when the impeller makes one complete rotation, the number of rotations of the impeller can be precisely increased by one count.

In the similar manner to the above-mentioned method of Figs. 17 and 18, a method of counting the number of rotations of the impeller in the gas meter having the counter according to the embodiment of Figs. 13 through 15 is conducted.

That is, in the method of counting the number of rotations of the impeller in the gas meter having the counter according to embodiment of Figs. 13 through 15, the switch 150 is controlled such that a signal is transmitted to the first sensor 261 depending on the rotation of the impeller 220 in the same manner as that of the above-mentioned method of Figs. 17 and 18. However, in this embodiment, a signal reflected by the reflector and transmitted to the second sensor 262 is used in counting the number of rotations of the impeller in the gas meter, unlike the above-mentioned method of Figs. 17 and 18.

Hereinafter, the process of counting the number of rotations of the impeller will be explained in brief without referring to the drawings.

When the gas meter is powered on, the controller 110 outputs an ON signal to the switch 150 to instruct the first sensor 261 to be operated. Thereby, the switch 150 is turned on so that the first sensor 261 generates a signal.

In response to the signal generation of the first sensor 261, the initial state of the second sensor 262 is checked. That is, whether a signal transmitted from the second sensor 262 to the controller 110 is on or off is determined.

In other words, it is determined whether the second sensor 262 has been operated by the reflector 223 before the gas meter is operated.

If a signal is transmitted to the second sensor 262 by the reflector 223, the second sensor 262 is in the ON state. If the second sensor 262 cannot receive a signal because the reflector 223 has rotated to a position at which it cannot receive the signal transmitted from the first sensor, the second sensor 262 is in the OFF state.

As such, depending on the position of the reflector 223, the initial ON/OFF state of the second sensor 262 can be determined.

When the initial state of the second sensor 262 is the ON state, the memory 120 of the controller 110 stores that the second sensor 262 is in the ON state. When the initial state of the second sensor 262 is the OFF state, the memory 120 of the controller 110 stores that the second sensor 262 is in the OFF state.

Thereafter, the controller 110 outputs an OFF signal to the switch 150 to interrupt the operation of the first sensor 261. Thereby, the switch 150 is turned off so that the signal transmission of the first sensor 261 is interrupted.

Whether the gas meter is turned off is determined. If the gas meter is not turned off, the controller 110 enters an idle state. The idle state can be understood as being a state in which the controller 110 is on standby to be activated later at a predetermined time point (period) by a timer or an external interruption signal.

The controller 110 can be activated after a preset duration (timer interruption) or by an external periodical signal (external interruption).

When the controller 110 is activated, an ON signal is output to the switch 150 so as to operate the first sensor 261. Thereby, the switch 150 is turned on to instruct the first sensor 261 to generate a signal.

In response to the signal generation of the first sensor 261, the current state of the second sensor 262 is checked. That is, depending on whether the reflector 223 is currently positioned just ahead of the first and second sensors 261 and 262, it is determined whether a current signal transmitted from the second sensor 262 to the controller 110 is an ON signal or an OFF signal.

If the current state of the second sensor 262 is the OFF state, the memory 120 stores that the current state of the second sensor 262 is the OFF state. If the current state of the second sensor 262 is the ON state, a previous state (whether in the ON or OFF state) of the second sensor is determined.

If the previous state of the second sensor 262 was the OFF state, the count number for measuring the number of rotations of the impeller 220 is increased (n = n + 1), and it is stored that the state of the second sensor 262 is the ON state. If the previous state of the second sensor 262 was the ON state, it is stored that the state of the second sensor 262 is the ON state without increasing the count number.

After it is stored in the memory 120 that the state of the second sensor 262 is the ON state, the controller 110 outputs an OFF signal to the switch 150 to interrupt the operation of the first sensor 261. Hence, the switch 150 is turned off, and the signal transmission of the first sensor 261 is interrupted.

Thereafter, whether the gas meter is turned off is determined. If the gas meter is not turned off, the controller 110 enters the idle state. That is, the controller 110 is converted into the standby state to be activated at a subsequent time point (period) by the timer or an external interruption signal.

According to the method according to this embodiment, only when the state of the second sensor 262 is determined and is converted from the OFF state into the ON state can the number of rotations of the impeller be counted. Consequently, when the impeller makes one complete rotation, the number of rotations of the impeller can be precisely increased by one count.

In the above description, although the impeller has been illustrated as being provided with the single interrupter or reflector, a plurality of interrupters or reflectors may be used in measuring the usage of gas as a simple modification in design.

In this case, a period at which a pulse signal is generated and the method of counting the number of rotations of the impeller are adjusted depending on the number of interrupters or reflectors.

Hereinafter, an example in which the number of interrupters or reflectors is four will be explained.

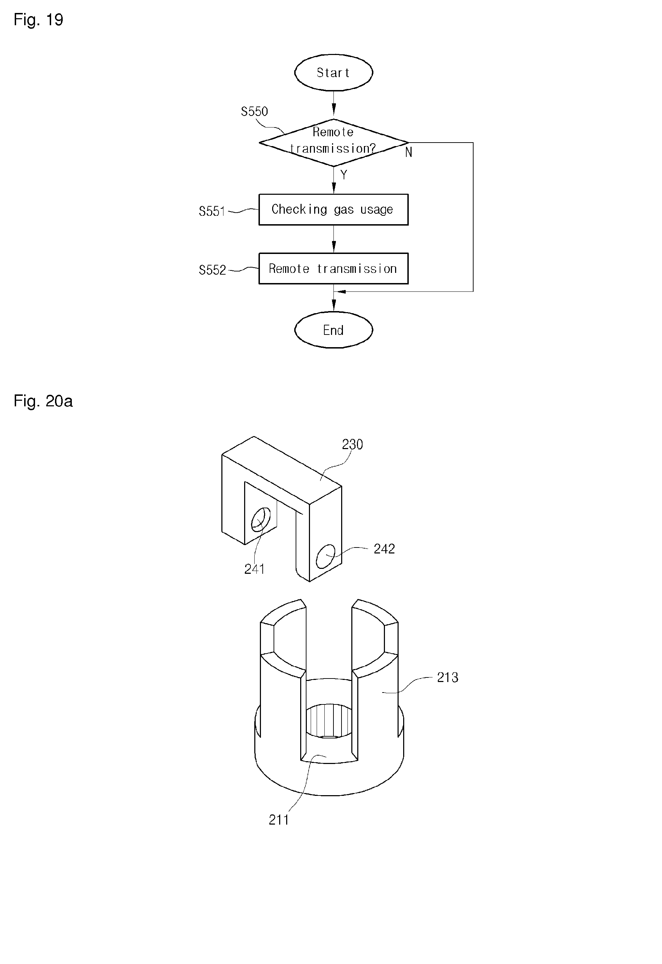

Figs. 20a through 20c are perspective views showing other embodiments of the present invention in which a plurality of impellers and sensors are provided. Corresponding to the embodiment of Fig. 6, Fig. 20a is a perspective view showing an embodiment in which four interrupters 213 extend upward from portions of the outer circumferential surface of the impeller body 211.

In detail, each interrupter 213 extends upward from a portion of the perimeter of the upper surface of the impeller body 211 that corresponds to 1/8 of the perimeter of the upper surface of the impeller body 211. That is, the upper surface of the impeller body 211 is circular and is formed 360° around the insert hole 212. The interrupter 213 is formed on a portion of the upper surface of the impeller body 211 that corresponds to 90° around the insert hole 212.

Preferably, a space between each interrupter 213 and the adjacent interrupter 213 is also defined on a portion of the upper surface of the impeller body 211 that corresponds to 90° on the insert hole 212.

Because the signal generation period of the first sensor is shorter than 1/8 of the period of rotation of the impeller 210, the first sensor 241 generates signals at least eight times, for example, eight, nine, ten or eleven times, while the impeller body 211 makes one complete rotation. Thus, each of the case where a signal is transmitted from the first sensor 241 to the second sensor 242 (the ON state of the second sensor 242) and the case where a signal output from the first sensor 241 is not transmitted to the second sensor 242 (the OFF state of the second sensor 242) is induced at least four times while the impeller body 211 makes one complete rotation.

The controller 110 instructs the first sensor to transmit a pulse signal at a period corresponding to 1/8 or less of the time it takes for the impeller to make one complete rotation at the maximum speed. The controller 110 counts the number of rotations of the impeller as making a 1/4 turn every time a section, in which a pulse is blocked by the interrupter and thus not transmitted to the second sensor, and a section, in which the interrupter is not present and thus a pulse is transmitted to the second sensor, pass once.

As such, if two or more interrupters are provided, the number of rotations of the impeller can be more precisely counted.

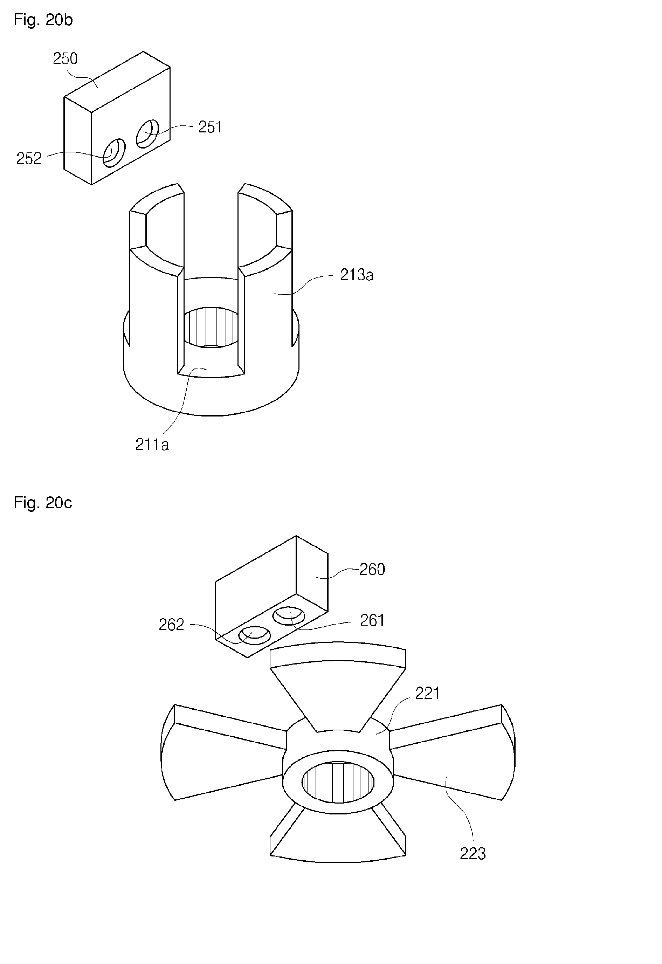

Corresponding to the embodiment of Fig. 11, Fig. 20b is a perspective view showing an embodiment in which four reflectors 213a extend upward from portions of the outer circumferential surface of the impeller body 211a.

In detail, each reflector 213a extends upward from a portion of the perimeter of the upper surface of the impeller body 211a that corresponds to 1/8 of the perimeter of the upper surface of the impeller body 211a. That is, the upper surface of the impeller body 211a is circular and is formed 360° around the insert hole 212. The reflector 213 is formed on a portion of the upper surface of the impeller body 211a that corresponds to 90° around the insert hole 212.

Preferably, a space between each reflector 213a and the adjacent reflector 213a is also defined on a portion of the upper surface of the impeller body 211 that corresponds to 90°.

Because the signal generation period of the first sensor 251 is shorter than 1/8 of the period of rotation of the impeller 211a, the first sensor 251 generates signals at least eight times, for example, eight, nine, ten or eleven times, while the impeller body 211a makes one complete rotation. Thus, each of the case where a signal output from the first sensor 251 is reflected by the reflector and then transmitted to the second sensor 252 (the ON state of the second sensor 252) and the case where a signal output from the first sensor 251 is not transmitted to the second sensor 252 (the OFF state of the second sensor 252) is induced at least four times while the impeller body 211 makes one complete rotation.

The controller 110 instructs the first sensor 251 to transmit a pulse signal at a period corresponding to 1/8 or less of the time it takes for the impeller to make one complete rotation at the maximum speed. The controller 110 counts the number of rotations of the impeller as making a 1/4 turn every time a section, in which a pulse is reflected by the reflector 213a and thus transmitted to the second sensor 252, and a section, in which the reflector 213a is not present and thus a pulse is not transmitted to the second sensor 252, pass once.

As such, if two or more reflectors are provided, the number of rotations of the impeller can be more precisely counted.

Corresponding to the embodiment of Fig. 14, Fig. 20c is a perspective view showing an embodiment in which four reflectors 223 radially extend from portions of the outer circumferential surface of the impeller body 220.

In detail, each reflector 223 has a fan shape and radially extends from a portion of the outer circumferential surface of the impeller body 221 that corresponds to 1/8 of the outer circumferential surface of the impeller body 221.

Preferably, a space between each reflector 223 and the adjacent reflector 223 is also defined on a portion of the outer circumferential surface of the impeller body 221 that corresponds to 1/8 of the outer circumferential surface of the impeller body 221.

Because the signal generation period of the first sensor 261 is shorter than 1/8 of the period of rotation of the impeller 220, the first sensor 261 generates signals at least eight times, for example, eight, nine, ten or eleven times, while the impeller body 221 makes one complete rotation. Thus, each case where a signal output from the first sensor 261 is reflected by the reflector and then transmitted to the second sensor 262 (the ON state of the second sensor 262) and the case where a signal output from the first sensor 261 is not transmitted to the second sensor 262 (the OFF state of the second sensor 262) is induced at least four times while the impeller body 221 makes one complete rotation.

The controller 110 instructs the first sensor 261 to transmit a pulse signal at a period corresponding to 1/8 or less of the time it takes for the impeller to make one complete rotation at the maximum speed. The controller 110 counts the number of rotations of the impeller as making a 1/4 turn every time a section, in which a pulse is reflected by the reflector 223 and thus transmitted to the second sensor 262, and a section, in which the reflector 223 is not present and thus a pulse is not transmitted to the second sensor 262, pass once.

As such, if two or more reflectors are provided, the number of rotations of the impeller can be more precisely counted.

Hereinafter, a method of remotely controlling the usage of gas will be explained with reference to the attached drawings.

Fig. 19 is a flowchart illustrating the operation of remotely transmitting the usage of gas according to the present invention. As shown in Fig. 19, the controller 110 receives a request for checking the usage of gas from the remote control unit 290 through a remote interface 272 (S550). The controller 110 checks the usage of gas stored in the memory 120 (S551). Thereafter, the controller 110 transmits the usage of gas to the remote control unit 290 through the remote interface 272.

As described above, the present invention uses an electronic gas meter using an optical sensor so that the usage of gas can be precisely measured and remotely controlled.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### Industrial Applicability

As described above, a gas meter according to the present invention can prevent leakage of gas and precisely measure the usage of gas. Furthermore, the gas meter makes it possible for a user to remotely check the usage of gas. Therefore, the gas meter of the present invention can be effectively used as a flow meter for a fluid such as gas.

## Claims

1. An apparatus for remotely transmitting gas usage of a gas meter, comprising:
a main body having a gas inlet and a gas outlet;
a diaphragm assembly provided to pump gas supplied into the main body;
a rotary slider configured to be rotated by pumping of the diaphragm assembly, the rotary slider controlling a flow rate of gas drawn into the diaphragm assembly;
a counter rotatably coupled to a portion of the rotary slider, the counter calculating cumulatively an amount of gas drawn into or discharged from a valve;
a display unit displaying gas usage cumulatively calculated by the counter;
a remote interface unit digitizing the gas usage cumulatively calculated by the counter and transmitting the digitized gas usage to a remote control unit; and
a controller controlling the remote interface unit such that the cumulatively calculated gas usage is digitized by counting a number of rotations of the counter and displayed on the display unit, and the digitized gas usage is transmitted to the remote control unit.

2. The apparatus of claim 1, wherein the counter comprises:
an impeller rotatably provided on a portion of the rotary slider;
a cover plate covering a portion of the impeller, the cover plate having a guide depression therein;
an interrupter formed by extending upward a portion of an outer circumferential surface of the impeller around a central portion of an upper surface of the impeller, the interrupter being rotated along with rotation of the impeller; and
a plurality of sensors including a first sensor for signal transmission and a second sensor for signal reception that are respectively disposed inside and outside the cover plate, wherein the first sensor outputs a pulse signal, and the second sensor outputs an off or on sensing signal depending on whether a signal output from the first sensor is blocked by the interrupter or not depending on a position of the interrupter,
wherein the controller instructs the first sensor to output a pulse signal at a period corresponding to 1/2 or less of a time taken for the impeller to make one complete rotation at a maximum speed and counts a number of rotations of the impeller every time a section, in which a pulse signal is blocked by the interrupter and thus not transmitted to the second sensor, and a section, in which the interrupter is not present and thus a pulse signal is transmitted to the second sensor, pass once.

3. The apparatus of claim 1, wherein the counter comprises:
an impeller rotatably provided on a portion of the rotary slider;
a cover plate covering a portion of the impeller, the cover plate having a guide depression therein;
one or more interrupters formed by extending upward portions of an outer circumferential surface of the impeller around a central portion of an upper surface of the impeller, the interrupters being rotated along with rotation of the impeller; and
a plurality of sensors including a first sensor for signal transmission and a second sensor for signal reception that are respectively disposed inside and outside the cover plate, wherein the first sensor outputs a pulse signal, and the second sensor outputs an off or on sensing signal depending on whether a signal output from the first sensor is blocked by one of the interrupters or not depending on positions of the interrupters,
wherein the controller instructs the first sensor to output a pulse signal at a period corresponding to 1/(a number of interrupters x 2) or less of a time taken for the impeller to make one complete rotation at a maximum speed and counts a number of rotations of the impeller as making 1/(the number of interrupters) turn every time a section, in which a pulse signal is blocked by one of the interrupters and thus not transmitted to the second sensor, and a section, in which the interrupter is not present and thus a pulse signal is transmitted to the second sensor, pass once.

4. The apparatus of claim 2, wherein the interrupter is rounded at a predetermined curvature radius, and an imaginary line connecting a first end of the interrupter to a point corresponding to a second end of the interrupter meets a central axis of the impeller.

5. The apparatus of claim 1, wherein the counter comprises:
an impeller rotatably provided on a portion of the rotary slider;
a cover plate covering a portion of the impeller, the cover plate having a guide depression therein;
one or more reflectors formed by extending upward portions of an outer circumferential surface of the impeller around a central portion of an upper surface of the impeller, the reflectors being rotated along with rotation of the impeller; and
a plurality of sensors including a first sensor for signal transmission and a second sensor for signal reception that are integrally formed and respectively disposed inside and outside the cover plate, wherein the first sensor outputs a pulse signal, and the second sensor outputs an on or off sensing signal depending whether or not a signal output from the first sensor is reflected by one of the reflectors, depending on positions of the reflectors,
wherein the controller instructs the first sensor to output a pulse signal at a period corresponding to 1/(a number of reflectors x 2) or less of a time taken for the impeller to make one complete rotation at a maximum speed and counts a number of rotations of the impeller as making 1/(the number of reflectors) turn every time a section, in which a pulse signal is reflected by one of the reflectors and thus transmitted to the second sensor, and a section, in which the reflector is not present and thus a pulse signal is not transmitted to the second sensor, pass once.

6. The apparatus of claim 1, wherein the counter comprises:
an impeller rotatably provided on a portion of the rotary slider;
one or more reflectors formed by radially extending portions of an outer circumferential surface of the impeller around a central portion of an upper surface of the impeller, the reflectors being rotated along with rotation of the impeller; and
a plurality of sensors including a first sensor for signal transmission and a second sensor for signal reception that are integrally provided and disposed above the reflectors, wherein the first sensor outputs a pulse signal, and the second sensor outputs an on or off sensing signal depending on whether a signal output from the first sensor is reflected by one of the reflectors or not depending on positions of the reflectors,
wherein the controller instructs the first sensor to output a pulse signal at a period corresponding to 1/(a number of reflectors x 2) or less of a time taken for the impeller to make one complete rotation at a maximum speed and counts a number of rotations of the impeller as making 1/(the number of reflectors) turn every time a section, in which a pulse signal is reflected by one of the reflectors and thus transmitted to the second sensor, and a section, in which the reflector is not present and thus a pulse signal is not transmitted to the second sensor, pass once.

7. An apparatus for remotely transmitting gas usage of a gas meter configured such that flow of gas is controlled by a valve assembly rotating between an upper casing and a lower casing that are airtightly assembled with each other, the apparatus comprising:
an impeller provided at a predetermined position in the upper casing, the impeller being rotatably coupled to the valve assembly;
a cover plate covering the impeller and having a guide depression therein, the cover plate being airtightly coupled to the upper casing; and
an outer cover having therein: a counter counting a number of rotations of the impeller and cumulatively calculating and indicating usage of gas drawn into or discharged from the valve assembly; and an interface unit transmitting the gas usage cumulatively calculated by the counter to an outside, the outer cover being airtightly coupled to a perimeter of the cover plate.

8. The apparatus of claim 7, wherein the counter comprises:
an interrupter formed by extending upward a portion of an outer circumferential surface of the impeller around a central portion of an upper surface of the impeller, the interrupter being rotated along with rotation of the impeller;
a plurality of sensors including a first sensor for signal transmission and a second sensor for signal reception that are respectively disposed inside and outside the guide depression of the cover plate, wherein the first sensor outputs a pulse signal, and the second sensor outputs an off or on sensing signal depending whether or not a signal output from the first sensor is blocked by the interrupter, depending on positions of the interrupter; and
a controller instructing the first sensor to output a pulse signal at a period corresponding to 1/2 or less of a time taken for the impeller to make one complete rotation at a maximum speed, the controller counting a number of rotations of the impeller every time a section, in which a pulse signal is blocked by the interrupter and thus not transmitted to the second sensor, and a section, in which the interrupter is not present and thus a pulse signal is transmitted to the second sensor, pass once.

9. The apparatus of claim 7, wherein the counter comprises:
one or more interrupters formed by extending upward portions of an outer circumferential surface of the impeller around a central portion of an upper surface of the impeller, the interrupter being rotated along with rotation of the impeller;
a plurality of sensors including a first sensor for signal transmission and a second sensor for signal reception that are respectively disposed inside and outside the guide depression of the cover plate, wherein the first sensor outputs a pulse signal, and the second sensor outputs an off or on sensing signal depending whether or not a signal output from the first sensor is blocked by one of the interrupters, depending on positions of the interrupters; and
a controller instructing the first sensor to output a pulse signal at a period corresponding to 1/(a number of interrupters x 2) or less of a time taken for the impeller to make one complete rotation at a maximum speed, the controller counting a number of rotations of the impeller as making 1/(the number of interrupters) turn every time a section, in which a pulse signal is blocked by one of the interrupters and thus not transmitted to the second sensor, and a section, in which the interrupter is not present and thus a pulse signal is transmitted to the second sensor, pass once.

10. The apparatus of claim 7, wherein the counter comprises:
one or more reflectors formed by extending upward portions of an outer circumferential surface of the impeller around a central portion of an upper surface of the impeller, the reflectors being rotated along with rotation of the impeller; and
a plurality of sensors including a first sensor for signal transmission and a second sensor for signal reception that are integrally formed and respectively disposed inside and outside the cover plate, wherein the first sensor outputs a pulse signal, and the second sensor outputs an on or off sensing signal depending on whether a signal output from the first sensor is reflected by one of the reflectors or not depending on positions of the reflectors.

11. The apparatus of claim 10, wherein the counter further comprises:
a controller instructing the first sensor to output a pulse signal at a period corresponding to 1/(a number of reflectors x 2) or less of a time taken for the impeller to make one complete rotation at a maximum speed, the controller counting a number of rotations of the impeller as making 1/(the number of reflectors) turn every time a section, in which a pulse signal is reflected by one of the reflectors and thus transmitted to the second sensor, and a section, in which the reflector is not present and thus a pulse signal is not transmitted to the second sensor, pass once.

12. The apparatus of claim 7, wherein the counter comprises:
one or more reflectors formed by radially extending portions of an outer circumferential surface of the impeller around a central portion of an upper surface of the impeller, the reflectors being rotated along with rotation of the impeller; and
a plurality of sensors including a first sensor for signal transmission and a second sensor for signal reception that are integrally formed and disposed above the cover plate, wherein the first sensor outputs a pulse signal, and the second sensor outputs an on or off sensing signal depending whether or not a signal output from the first sensor is reflected by one of the reflectors, depending on positions of the reflectors.

13. The apparatus of claim 12, wherein the counter further comprises:
a controller instructing the first sensor to output a pulse signal at a period corresponding to 1/(a number of reflectors x 2) or less of a time taken for the impeller to make one complete rotation at a maximum speed, the controller counting a number of rotations of the impeller as making 1/(the number of reflectors) turn every time a section, in which a pulse signal is reflected by one of the reflectors and thus transmitted to the second sensor, and a section, in which the reflector is not present and thus a pulse signal is not transmitted to the second sensor, pass once.

14. An electronic gas meter configured such that flow of gas is controlled by a valve assembly rotating between an upper casing and a lower casing that are airtightly assembled with each other, the electronic gas meter comprising:
an impeller provided at a predetermined position in the upper casing, the impeller being rotatably coupled to the valve assembly;
a cover plate covering the impeller and having a guide depression therein, the cover plate being airtightly coupled to the upper casing; and
an outer cover having therein: a counter counting a number of rotations of the impeller and cumulatively integrating and indicating usage of gas drawn into or discharged from the valve assembly; and an interface unit transmitting the gas usage cumulatively integrated by the counter to an outside, the outer cover being airtightly coupled to a perimeter of the cover plate.

15. The apparatus of claim 14, wherein the counter comprises:
one or more interrupters formed by extending upward portions of an outer circumferential surface of the impeller around a central portion of an upper surface of the impeller, the interrupter being rotated along with rotation of the impeller;
a plurality of sensors including a first sensor for signal transmission and a second sensor for signal reception that are respectively disposed inside and outside the guide depression of the cover plate, wherein the first sensor outputs a pulse signal, and the second sensor outputs an off or on sensing signal depending whether or not a signal output from the first sensor is blocked by one of the interrupters, depending on positions of the interrupters; and
a controller instructing the first sensor to output a pulse signal at a period corresponding to 1/(a number of interrupters x 2) or less of a time taken for the impeller to make one complete rotation at a maximum speed, the controller counting a number of rotations of the impeller as making 1/(the number of interrupters) turn every time a section, in which a pulse signal is blocked by one of the interrupters and thus not transmitted to the second sensor, and a section, in which the interrupter is not present and thus a pulse signal is transmitted to the second sensor, pass once.

16. The apparatus of claim 14, wherein the counter comprises:
one or more reflectors formed by extending upward portions of an outer circumferential surface of the impeller around a central portion of an upper surface of the impeller, the reflectors being rotated along with rotation of the impeller; and
a plurality of sensors including a first sensor for signal transmission and a second sensor for signal reception that are integrally formed and respectively disposed inside and outside the cover plate, wherein the first sensor outputs a pulse signal, and the second sensor outputs an on or off sensing signal depending on whether a signal output from the first sensor is reflected by one of the reflectors or not depending on positions of the reflectors.
a controller instructing the first sensor to output a pulse signal at a period corresponding to 1/(a number of reflectors x 2) or less of a time taken for the impeller to make one complete rotation at a maximum speed, the controller counting a number of rotations of the impeller as making 1/(the number of reflectors) turn every time a section, in which a pulse signal is reflected by one of the reflectors and thus transmitted to the second sensor, and a section, in which the reflector is not present and thus a pulse signal is not transmitted to the second sensor, pass once.

17. The apparatus of claim 14, wherein the counter comprises:
one or more reflectors formed by radially extending portions of an outer circumferential surface of the impeller around a central portion of an upper surface of the impeller, the reflectors being rotated along with rotation of the impeller;
a plurality of sensors including a first sensor for signal transmission and a second sensor for signal reception that are integrally formed and disposed above the cover plate, wherein the first sensor outputs a pulse signal, and the second sensor outputs an on or off sensing signal depending whether or not a signal output from the first sensor is reflected by one of the reflectors, depending on positions of the reflectors; and
a controller instructing the first sensor to output a pulse signal at a period corresponding to 1/(a number of reflectors x 2) or less of a time taken for the impeller to make one complete rotation at a maximum speed, the controller counting a number of rotations of the impeller as making 1/(the number of reflectors) turn every time a section, in which a pulse signal is reflected by one of the reflectors and thus transmitted to the second sensor, and a section, in which the reflector is not present and thus a pulse signal is not transmitted to the second sensor, pass once.
